# EUROPÄISCHE PATENTSCHRIFT

(11) **EP 1 701 557 B1**
(45) Veröffentlichungstag und Bekanntmachung des Hinweises auf die Patenterteilung: **23.01.2008**
(21) Anmeldenummer: 05005168.9
(22) Anmeldetag: 09.03.2005
(51) Int. Cl.: H04Q 3/00

(54) **Verfahren zum Vermitteln von SS7-Nachrichten, Netzwerkanordnung sowie Netzwerkelement**
Method for the transmission of SS7 messages, network arrangement and network element
Méthode pour la transmission de messages SS7, arrangement de réseau et élément de réseau

(43) Veröffentlichungstag der Anmeldung: 13.09.2006
(73) Patentinhaber: Nokia Siemens Networks GmbH & Co. KG, 81541 München (DE)
(72) Erfinder: Angermayr, Manfred, 86529 Schrobenhausen (DE); Beermann, Martin, 82178 Puchheim (DE); Meyer, Klaus, 82194 Gröbenzell (DE); Wilke, Armin, 84539 Ampfing (DE); Wodarz, Jürgen, 82515 Wolfratshausen (DE)

(56) Entgegenhaltungen:
- EP-A- 0 840 530
- WO-A-03/058982

## Beschreibung

Die vorliegende Erfindung betrifft ein Verfahren zum Vermitteln von SS7-Nachrichten, eine Netzwerkanordnung sowie ein Netzwerkelement für Telekommunikationsnetze, wodurch das Hinzufügen von Netzelementen zu einem SS7-Telekommunikationsnetzwerk erleichtert wird.

Moderne Kommunikationsnetze transportieren üblicherweise zwei Arten von Verkehr bzw. Daten. Die erste Art ist der Verkehr, welcher von Nutzern oder Teilnehmern gesendet oder empfangen wird und dessen Übertragung häufig dem Nutzer oder Teilnehmer in Rechnung gestellt wird. Dieser Verkehr wird auch als Nutzerverkehr, Nutzerdaten oder Teilnehmerverkehr bezeichnet. Die zweite Art ist jener Verkehr, der durch das Netzwerkmanagement verursacht und häufig als Managementverkehr bezeichnet wird.

Auf dem Gebiet der Telekommunikation wird der Managementverkehr auch als Signalisierungsverkehr bezeichnet. Dabei bezieht sich der Begriff "Signalisierung" auf den Austausch von Signalisierungsnachrichten zwischen verschiedenen Netzelementen wie Datenbankservern, Ortsvermittlungsstellen, Transitvermittlungsstellen und Nutzerendgeräten. Ein weitläufig bekanntes Protokoll zum Übertragen solcher Signalisierungsinformationen ist das Signaling System 7 (SS7), häufig auch als Zentrales Zeichengabesystem Nr. 7 (ZZS7) oder Common Channel Signaling System 7 (CCS7) bezeichnet.

Das Signaling System 7 ist durch die International Telecommunication Union (ITU) in der Standardserie Q.7xx standardisiert und erfüllt alle Signalisierungsanforderungen heutiger Telekommunikationsnetze.

Das Signaling System 7 bildet dabei ein unabhängiges Netzwerk, in welchem SS7-Nachrichten zwischen den Netzelementen über bidirektionale Kanäle ausgetauscht werden, welche als Links bezeichnet werden. Die Signalisierung erfolgt außerhalb des (Sprach)-Bandes (out-of-band) und nicht innerhalb des Bandes (in-band) auf Kanälen, die den Nutzerdaten (z.B. Sprache) vorbehalten sind. Dies ermöglicht neben schnelleren Verbindungsaufbauzeiten eine Reihe von Funktionen, beispielsweise Intelligent Network (IN) Dienste, die im Signalisierungsnetz ablaufen können, ohne daß parallele Nutzdatenverbindungen aufgebaut werden müssen.

Die Elemente eines SS7-Netzwerks sind als Signaling Points bekannt, die durch einen Signaling Point Code (SPC) eindeutig identifiziert werden. Diese Point Codes werden in den Signalisierungsnachrichten zwischen Signaling Points übertragen und bezeichnen jeweils die Quelle und das Ziel einer Nachricht. Jeder Signaling Point nutzt eine Routingtabelle zur Auswahl eines geeigneten Signalisierungswegs für jede Nachricht.

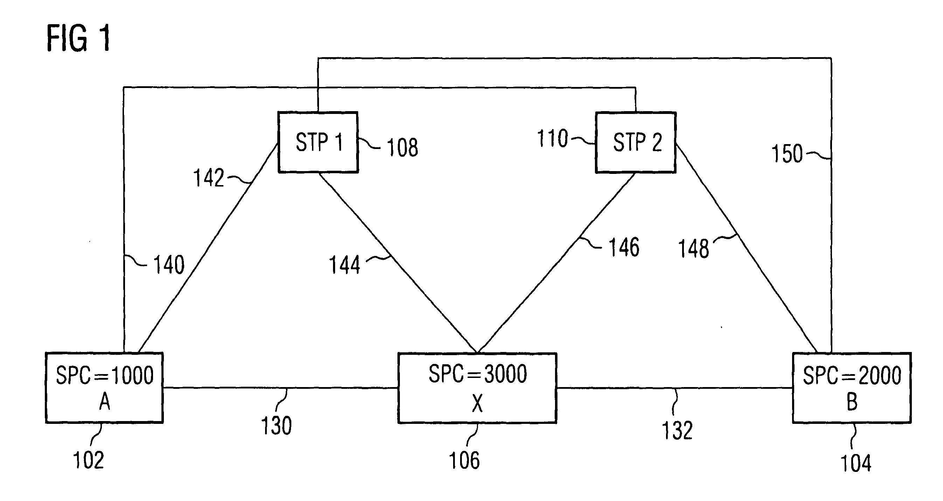

Fig. 1 zeigt in schematischer Darstellung einen Abschnitt eines beispielhaften Telekommunikationsnetzwerks, in welchem das SS7 zur Signalisierung genutzt wird. Der dargestellte Netzwerkabschnitt umfaßt eine erste Vermittlungsstelle 102 mit einem ersten SPC=1000, eine zweite Vermittlungsstelle 104 mit einem zweiten SPC=2000 und eine zwischen diesen beiden Vermittlungsstellen geschaltete dritte Vermittlungsstelle 106 mit einem dritten SPC=3000. Nutzinformationen werden über Nutzkanalbündel bzw. Trunk Groups 130, 132 ausgetauscht, wobei ein erstes Bündel 130 die erste mit der dritten Vermittlungsstelle verbindet und ein zweites Bündel 132 die zweite mit der dritten Vermittlungsstelle verbindet.

Das Signalisierungsnetzwerk des Netzwerkabschnitts aus Fig. 1 umfaßt Signalisierungsverbindungen 140..150, die drei Vermittlungsstellen 102..106 sowie zwei Signaling Transfer Points 108 und 110. Die Verbindungen 140..150 sind so gestaltet, daß jeder der beiden STP 108, 110 mit jeder der drei Vermittlungsstellen 102..106 direkt verbunden ist. Derart redundante Signalisierungskonfigurationen werden häufig gewählt, um sicherzustellen, daß alle Einzelausfälle und auch eine Reihe von Mehrfachausfällen von Komponenten oder Verbindungen des Signalisierungsnetzes nicht zu einer Serviceunterbrechung führen. Beispielsweise führt der Ausfall einer beliebigen der Signalisierungsverbindungen 140..150 oder eines beliebigen STP 108, 110 nicht dazu, daß die Signalisierung zwischen den Vermittlungsstellen 102..106 unterbrochen wird.

Demgegenüber besteht im Nutzkanalnetz, im Beispiel der Fig. 1 gebildet durch die Vermittlungsstellen 102..106 und die Nutzkanalbündel 130, 132 meist keine derart weitreichende Redundanz. Der Ausfall des dritten Elements 106 hätte beispielsweise den Ausfall der Nutzkanäle zwischen dem ersten und dem zweiten Element 102, 104 zur Folge. Traditionell ist dieses Problem durch leistungsfähige und besonders ausfallsicher konstruierte Vermittlungsstellen 106 gelöst worden.

In einer zunehmenden Anzahl von Fällen ist allerdings der Einsatz einer einzigen ausfallsicher konstruierten Vermittlungsstelle 106 zwischen zwei weiteren Vermittlungsstellen 102, 104 nicht ausreichend, um allen Anforderungen gerecht zu werden.

Ein solcher Fall tritt beispielsweise auf, wenn sich auf dem Weg zwischen den Vermittlungsstellen 102 und 104 neben der dritten Vermittlungsstelle 106 eine vierte Vermittlungsstelle (nicht dargestellt) befindet und vorgesehen ist, diese dritte und vierte Vermittlungsstelle etwa durch Vermittlungsknoten, die gemäß der sogenannten Next Generation Network Architektur konstruiert sind, sowie entsprechende Gateways, zu ersetzen.

Ferner kann sich im Betrieb herausstellen, daß - etwa aufgrund fehlerhafter Planung - die Leistungsfähigkeit eines einzigen Vermittlungselements 106 nicht ausreicht, den auftretenden Verkehr zuverlässig abzuwickeln und es notwendig wird, zusätzliche Vermittlungselemente so in das Netzwerk zu integrieren, daß die zusätzlichen Vermittlungselemente anschließend einen Teil des vom Vermittlungselement 106 bearbeiteten Verkehrs bearbeiten.

Änderungen im Signalisierungsnetzwerk und insbesondere das Hinzufügen von Netzelementen führen stets dazu, daß die Routingtabellen vieler Signaling Points geändert werden müssen, beispielsweise da hinzugefügte Netzelemente gemäß der für SS7 geltenden Standards stets einen eigenen Signaling Point Code erhalten. Häufig wirken die Änderungen über das Netzwerk eines Netzbetreibers hinaus auch in die Routing-Tabellen von Netzelementen anderer nationaler oder internationaler Betreiber.

Ein anderes Beispiel ist aus dem Dokument WO 03/058 982 bekannt.

Es ist daher eine Aufgabe der vorliegenden Erfindung, ein Verfahren zum Vermitteln von SS7-Nachrichten, eine Netzwerkanordnung sowie ein Netzwerkelement anzugeben, welches das Hinzufügen von Netzelementen zu einem SS7-Telekommunikationsnetzwerk erleichtert.

Diese Aufgabe wird gelöst durch ein erfindungsgemäßes Verfahren zum Behandeln von SS7-Nachrichten in einem SS7-Netzwerk. Das SS7-Netzwerk weist ein erstes Vermittlungselement und mindestens ein zweites Vermittlungselement mit gleichem Signaling Point Code (innerhalb des gleichen MTP Netzwerks) auf. Nutzkanalbündel zur Verbindung mit benachbarten Netzelementen sind zu einem Teil an das erste Vermittlungselement und zu einem weiteren Teil an das zweite Vermittlungselement angeschlossen. Zumindest in einem der Vermittlungselemente mit gleichem Signaling Point Code ist folgendes vorgesehen:
- Empfangen einer nutzkanalsteuernden SS7-Nachricht;
- Ermitteln des durch die empfangene SS7-Nachricht gesteuerten Nutzkanals;
- Ermitteln, ob der gesteuerte Nutzkanal an das empfangende Vermittlungselement angeschlossen ist; und
- Ausführen der Nutzkanaloperation, falls der gesteuerte Nutzkanal an das empfangende Vermittlungselement angeschlossen ist; anderenfalls
- Verwerfen der empfangenen SS7-Nachricht, falls diese von einem anderen der Vermittlungselemente empfangen wurde und bereits alle anderen Vermittlungselemente von dieser Nachricht durchlaufen wurden; anderenfalls
- Weiterleiten der empfangenen SS7-Nachricht an ein anderes der Vermittlungselemente.

Die Erfindung erlaubt mit anderen Worten den Betrieb von zwei oder mehr Vermittlungselementen bzw. Vermittlungsstellen mit dem gleichen Signaling Point Code innerhalb des gleichen logischen Netzwerks und vermeidet somit das Umstellen der Routing-Tabellen in den restlichen Netzelementen beim Hinzufügen eines weiteren Vermittlungselements.

Wird beispielsweise ein Vermittlungselement mit SPC=3000 durch zwei neue Vermittlungselemente ersetzt (oder neben dem bestehenden Vermittlungselement wird ein weiteres hinzugefügt), erhalten beide Vermittlungselemente den SPC=3000. Die Nutzkanäle werden auf die beiden Vermittlungselemente aufgeteilt, beispielsweise indem physikalisch die entsprechenden Kabel geeignet angeschlossen werden. Eine Änderung der Konfiguration an den benachbarten Netzelementen ist nicht erforderlich.

Die Signalisierungsverbindungen, etwa zwischen STP und den beiden Vermittlungselementen, können auf verschiedene Weise verbunden werden, wie mit weiteren Details im Rahmen der detaillierten Beschreibung der bevorzugten Ausführungsbeispiele weiter unten dargelegt. Zumindest eines der Vermittlungselemente ist mit Mitteln zum Ausführen des o.g. Verfahrens bezüglich der Signalisierungsnachrichten ausgerüstet. Auf diese Weise kann die Erfindung vorteilhaft für das Umstellen von Vermittlungselementen genutzt werden, bei dem zumindest für eine Übergangsphase das alte Vermittlungselement (welches das erfindungsgemäße Verfahren nicht unterstützt) und das neue, erfindungsgemäße Vermittlungselement gemeinsam die Vermittlungsaufgaben bewältigen.

Vorteilhaft ist die vorliegende Erfindung sowohl in klassischen zeitschlitzbasierten Telekommunikationsnetzen, sogenannten TDM-Netzen, als auch im Zusammenhang mit dem IPbasierten Transport von Nutz- und Signalisierungsinformation anwendbar.

Die Erfindung betrifft ferner ein Vermittlungselement mit Mitteln zum Durchführen des Verfahrens sowie eine Netzwerkanordnung mit zwei oder mehr derartigen Vermittlungselementen.

Weitere vorteilhafte Ausgestaltungen sind in den abhängigen Ansprüchen angegeben.

Im folgenden werden Ausführungsbeispiele der vorliegenden Erfindung im Zusammenhang mit drei Zeichnungen näher erläutert.

Fig. 1 zeigt in schematischer Darstellung einen Abschnitt eines herkömmlichen Telekommunikationsnetzes, in welchem in Übereinstimmung mit den relevanten ITU und ANSI Normen jedem Netzelement ein Signaling Point Code eineindeutig zugeordnet ist.
Fig. 2 zeigt in schematischer Darstellung einen Abschnitt aus einem Telekommunikationsnetz, in welchem zwei Vermittlungselemente den gleichen Signaling Point Code aufweisen.
Fig. 3 zeigt in schematischer Darstellung einen Abschnitt aus einem Telekommunikationsnetz, in welchem zwei Media Gateway Controller an die Stelle eines klassischen Vermittlungselements treten und dabei gleichen Signaling Point Code aufweisen.

Wie bereits erläutert ist in Fig. 1 ein Abschnitt eines beispielhaften Telekommunikationsnetzwerks dargestellt, in welchem das SS7 zur Signalisierung genutzt wird. Der dargestellte Netzwerkabschnitt umfaßt eine erste Vermittlungsstelle 102 mit einem ersten SPC=1000, eine zweite Vermittlungsstelle 104 mit einem zweiten SPC=2000 und eine zwischen diesen beiden Vermittlungsstellen geschaltete dritte Vermittlungsstelle 106 mit einem dritten SPC=3000. Nutzinformationen werden über Nutzkanalbündel bzw. Trunk Groups 130, 132 ausgetauscht, wobei ein erstes Bündel 130 die erste mit der dritten Vermittlungsstelle verbindet und ein zweites Bündel 132 die zweite mit der dritten Vermittlungsstelle verbindet. In der Regel werden die genannten Bündel 130, 132 mehrere Nutzkanäle bzw. Trunks umfassen.

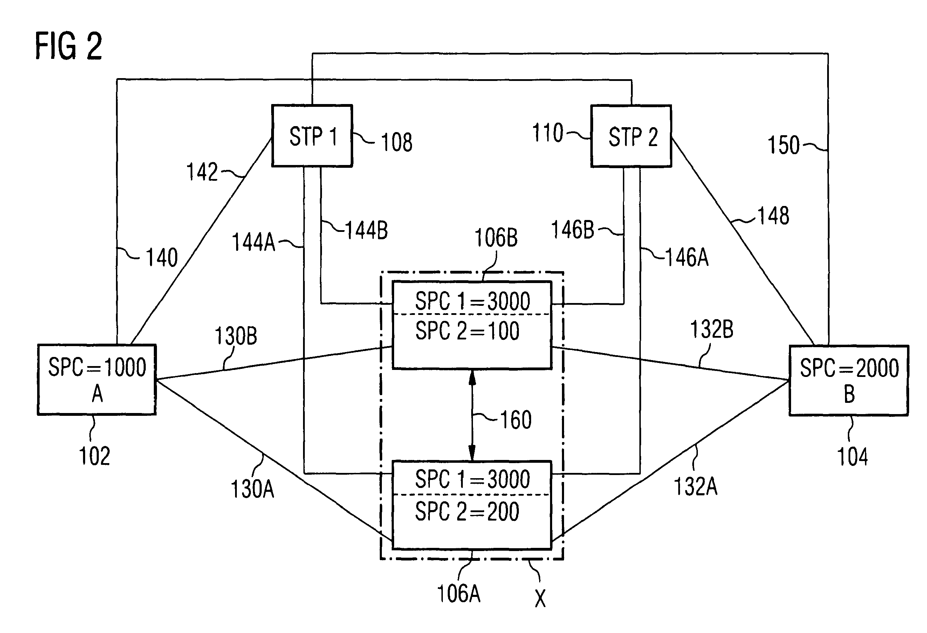

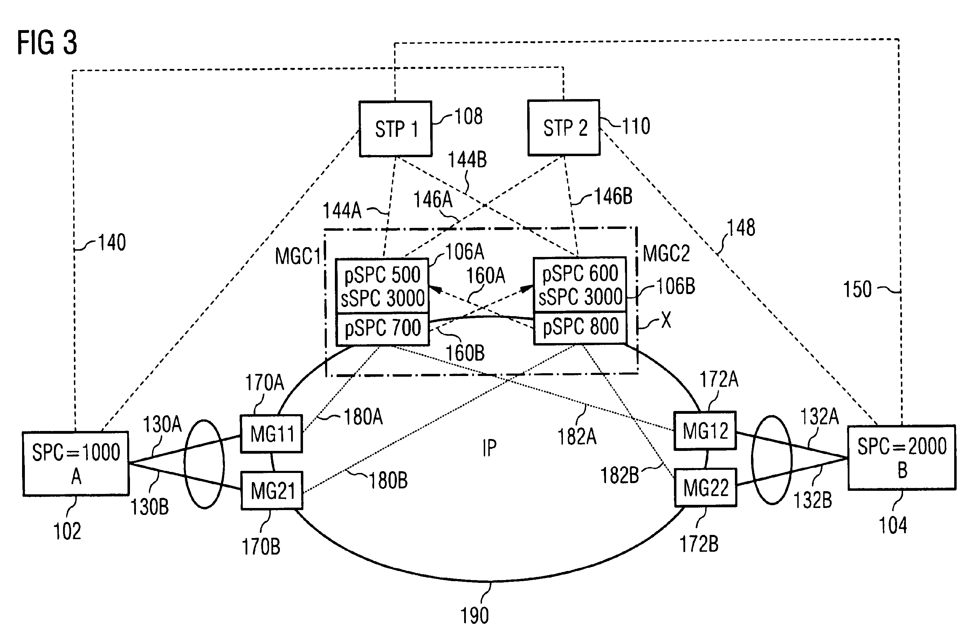

Das Signalisierungsnetzwerk des Netzwerkabschnitts aus Fig. 1 umfaßt Signalisierungsverbindungen 140..150, die drei Vermittlungsstellen 102..106 sowie zwei Signaling Transfer Points 108 und 110. Die Verbindungen 140..150 sind so gestaltet, daß jeder der beiden STP 108, 110 mit jeder der drei Vermittlungsstellen 102..106 direkt verbunden ist. Falls im folgenden nicht anders angegeben, sind die genannten Elemente und Verbindungen mit gleichen Eigenschaften auch Bestandteil der Konfigurationen gemäß Fig. 2 und 3.

Dabei kann es sich um klassische Elemente 102..110 handeln, welche über sogenannte TDM (Time Division Multiplex) Verbindungen 130..150 Nutz- und Signalisierungsinformationen austauschen. Für den Austausch der Signalisierungsinformationen über die Signalisierungsverbindungen 140..150 nutzt das Signaling System 7 einen Protokollstack, in welchem die Hardware- und Softwarefunktionen des SS7-Protokolls in funktionale Abstraktionen unterteilt werden, die Level bzw. Ebenen genannt werden. Diese Level lassen sich mit einigen Einschränkungen auf das Open Systems Interconnect (OSI) 7-Layer-Modell bzw. Schichtenmodell der International Standards Organization (ISO) abbilden.

Die unteren drei Level werden Message Transfer Part (MTP) genannt. MTP Level 1 definiert die physikalischen, elektrischen und funktionalen Eigenschaften des digitalen Signaling Link. MTP Level 2 sichert die korrekte Ende-zu-Ende-Übertragung einer Nachricht über einen Signaling Link. MTP Level 3 liefert das Routing von Nachrichten zwischen Signaling Points des SS7-Netzes.

Funktionen werden bei SS7 durch sogenannte User Parts bereitgestellt. Ein häufig genutzter User Part ist der ISDN User Part (ISUP), welcher das Protokoll definiert, das zum Belegen, Verwalten und Freigeben von Leitungen genutzt wird, welche den Nutzerverkehr zwischen Vermittlungsstellen transportieren (z.B. zwischen dem Anrufer und dem Angerufenen). In einigen Ländern wird der weniger leistungsfähige Telephone User Part (TUP) anstelle des ISUP genutzt.

Alle User Parts nutzen in klassischen Telekommunikationsnetzen den MTP Level 3 zum Nachrichtentransport, wobei sich der MTP Level 3 seinerseits auf die Level 2 und 1 stützt, um den Transport zu leisten sowie das Linkmanagement durchzuführen.

Alternativ kann es sich bei allen oder einigen der Elemente 102..110 auch um moderne Elemente handeln, bei denen entweder die Signalisierung oder der Austausch von Nutzinformationen oder beides über Verbindungen oder Netze gemäß des Internet Protocol (IP) erfolgt. Denn es besteht der Wunsch, den auf exklusiven und daher teuren Leitungen basierenden Transport der Signalisierungs- und Nutzinformation durch Dienste, die auf dem Internet Protocol (IP) basieren, zu ersetzen. Für Signalisierungszwecke wurde von der Internet Engineering Task Force (IETF) im RFC 3332 das Protokoll MTP3 User Adaptation Layer (M3UA) spezifiziert, welches an die Stelle der MTP Level 3 tritt. Alternative, auf IP basierende Protokollstacks sehen die Übertragung der MTP Level 3 Informationen mittels der IETF Sigtran Protokolle M2PA oder M2UA über SCTP und IP vor. In gleicher Weise gibt es eine Reihe von wohlbekannten Protokollen für den Transport der Nutzinformation über IP Netze.

Stellt sich im laufenden Betrieb heraus, daß das Vermittlungselement 106 allein durch Erweiterung nicht an wachsende Anforderungen angepaßt werden kann, liefert die vorliegende Erfindung eine Möglichkeit, das Vermittlungselement 106 durch zwei Vermittlungselemente 106A und 106B mit gleichem SPC=3000 zu ersetzen (Fig. 2). Soll ein klassisches Vermittlungselement 106 durch Media Gateways 170, 172 und Media Gateway Controller 106A, 106B ersetzt werden, können die Media Getway Controller 106A, 106B ebenfalls gemäß der vorliegenden Erfindung mit dem SPC=3000 des klassischen Elements 106 ausgestattet werden (Fig. 3), um ein aufwendiges Anpassen der Routing-Tabellen anderer Netzelemente zu vermeiden.

Mit Bezug auf Fig. 2 wird im folgenden erläutert, wie zu einem Vermittlungselement 106 ein zweites Vermittlungselement geschaltet werden kann, um einen Teil der Vermittlungsaufgaben des Vermittlungselements 106 zu übernehmen. Fig. 2 kann äquivalent auch angesehen werden als das Ersetzen eines Vermittlungselements 106 durch zwei Vermittlungselemente 106A, 106B. Dabei dient die Beschränkung auf zwei Vermittlungselemente 106A, 106B lediglich der Vereinfachung der vorliegenden Beschreibung und ist nicht als Beschränkung auf zwei Elemente 106A, 106B aufzufassen. Vielmehr ist die Lehre der vorliegenden Erfindung auf eine beliebige Anzahl von Elementen 106A, 106B mit einem gemeinsamen SPC anwendbar.

In Fig. 2 sind ein erstes Vermittlungselement 106A und ein zweites Vermittlungselement 106B dargestellt, die den gleichen SPC=3000 aufweisen. An das erste Vermittlungselement 106A sind eine erste Menge bidirektionaler Nutzkanäle 130A, 132A angeschlossen. An das zweite Vermittlungselement 106B sind eine zweite Menge bidirektionaler Nutzkanäle 130B, 132B angeschlossen. Werden die beiden Vermittlungselemente 106A, 106B als Ersatz für ein "altes" Vermittlungselement 106 (Fig.
1) eingesetzt, bleibt die in den benachbarten Netzelementen 102, 104 getroffene Zuordnung der Nutzkanäle zu einem oder mehreren Nutzkanalbündeln 130, 132 erhalten. War beispielsweise bislang ein Nutzkanalbündel 130 definiert, werden die davon umfaßten Nutzkanäle in eine erste und zweite Menge bzw. einen ersten und zweiten Teil 130A, 130B aufgeteilt; aus Sicht des Netzelements 102 handelt es sich nach wie vor um ein einheitliches Bündel 130 zum benachbarten Knoten mit SPC=3000.

Sind die beiden Vermittlungselemente 106A, 106B von gleicher Leistungsfähigkeit und sind die Nutzkanäle im Bündel 130 im statistischen Mittel gleich ausgelastet, kann jeweils die Hälfte der Nutzkanäle des Bündels 130 an jedes der Vermittlungselemente 106A, 106B angeschlossen werden. Analog wird mit dem Bündel 132 verfahren. Natürlich kann die Verteilung geeignet angepaßt werden, wenn die Vermittlungselemente 106A, 106B verschieden leistungsfähig oder die Nutzkanäle verschieden stark ausgelastet sind. Vorteilhaft bleibt die Nutzkanalzuordnung in den benachbarten Elementen 102, 104 so, als handele es sich bei den Vermittlungselementen 106A, 106B um ein einheitliches Vermittlungselement (durch gestrichelte Linie angedeutet).

An das Signalisierungsnetz können die Vermittlungselemente 106A, 106B angeschlossen werden, indem die (jeweils mindestens zwei) Links der bisherigen Link Sets 144, 146 auf die Vermittlungselemente 106A, 106B verteilt werden. Eine erste Gruppe von Links (144A, 146A) wird an der erste Vermittlungselement 106A angeschlossen, und eine zweite Gruppe von Links (144B, 146B) wird an der zweite Vermittlungselement 106B angeschlossen. Wurden die jeweiligen Links der Link Sets 144, 146 jeweils auf der gleichen physikalischen Leitung geführt, sollte eine Aufteilung der Links auf verschiedene Leitungen vorgenommen werden, um die Gruppen 144A/B und 146A/B so zu bilden, daß eine Pfadredundanz vorliegt. Dies kann eine Anpassung der Konfiguration der STP 108, 110 erfordern, die jedoch nicht die Routing-Datenbank betrifft. Aus Sicht der STP 108, 110 liegt dann ebenfalls ein einheitliches Element, gebildet aus den Einzelelementen 106A und 106B, vor; die Verteilung der Signalisierungsnachrichten mit Ziel DPC=3000 zwischen den Links oder Linkgruppen 144A und 144B bzw. 146A und 146B erfolgt gemäß der üblichen Load Sharing Regeln innerhalb der Link Sets.

Die Zustellung von Signalisierungsnachrichten an die Vermittlungselemente 106A, 106B kann unter den genannten Voraussetzungen so erfolgen, als handele es sich um ein einziges Element mit SPC=3000. Der beabsichtigte Effekt, daß keine Routing-Informationen in einem Netzelement angepaßt werden muß, wird dadurch vorteilhaft erreicht.

Im Betrieb wird in dieser Konfiguration, in Abhängigkeit von den Load Sharing Regeln in den STP 108, 110, in etwa der Hälfte der Fälle dem ersten Vermittlungselement 106A eine nutzkanalbezogene Signalisierungsnachricht zugestellt werden, die einen Nutzkanal betrifft, der nicht am ersten Vermittlungselement 106A angeschlossen ist, mit der Folge, daß die nutzkanalbezogene Signalisierungsnachricht vom ersten Vermittlungselement 106A nicht bearbeitet werden kann. Ein Beispiel für eine solche nutzkanalbezogene Signalisierungsnachricht ist etwa eine Initial Address Message (IAM), die einen Parameter Circuit Identification Code (CIC) aufweist, welcher den vom Nachbarelement 102 oder 104 angeforderten Nutzkanal adressiert. In diesem Fall leitet das erste Vermittlungselement 106A die nutzkanalbezogene Signalisierungsnachricht an das zweite Vermittlungselement 106B weiter. Umgekehrt leitet das zweite Vermittlungselement 106B nutzkanalbezogene Signalisierungsnachrichten, die Nutzkanäle betreffen, die nicht am zweiten Vermittlungselement 106B angeschlossen sind, an das erste Vermittlungselement 106A weiter. Für diese Weiterleitungen ist eine bidirektionale Verbindung 160 zwischen den Elementen 106A, 106B vorgesehen.

Um zu verhindern, daß etwa im Falle fehlerhafter nutzkanalbezogener Signalisierungsnachrichten, die einen Nutzkanal betreffen, der überhaupt nicht existiert, Nachrichten zwischen den Vermittlungselementen 106A, 106B über die Verbindung 160 endlos hin und her geschickt werden, wird vorgesehen, daß Nachrichten, die von einem anderen der Vermittlungselemente 106A, 106B empfangen wurden und keinen am jeweiligen Vermittlungselement angeschlossenen Nutzkanal betreffen, verworfen werden. Dem Fachmann sind Verfahren bekannt, mit denen sichergestellt werden kann, daß im Fall von mehr als zwei Vermittlungselementen 106A, 106B zunächst jedes der Vermittlungselemente durchlaufen wird, bevor die Nachricht endgültig verworfen wird. Dies kann etwa erreicht werden, indem Nachrichten die Vermittlungselemente stets in einer bestimmten Reihenfolge durchlaufen und verworfen werden, falls sie wieder beim dem Vermittlungselement empfangen werden, bei dem sie ursprünglich von einem der STP empfangen wurden.

In einer alternativen Ausgestaltung kann vorgesehen werden, daß sämtliche Signalisierungsnachrichten bei nur einem der Vermittlungselemente 106A, 106B eingehen, d.h. die Link Sets 144 und 146 werden nicht aufgeteilt, sondern beispielsweise nur am ersten Vermittlungselement 106A angeschlossen (nicht dargestellt). Das erste Vermittlungselement 106A übernimmt dann die Aufteilung der Signalisierungsnachrichten anhand des betroffenen Nutzkanals in Nachrichten, die lokal durch das erste Vermittlungselement 106A selbst bearbeitet werden und Nachrichten, die im zweiten Vermittlungselement 106B bearbeitet werden. In dieser Ausgestaltung kann ein zweites Vermittlungselement 106B eingesetzt werden, welches selbst das erfindungsgemäße Verfahren nicht unterstützt. Signalisierungsnachrichten, die am zweiten Vermittlungselement 106B nicht angeschlossene Nutzkanäle betreffen, werden dort verworfen.

Prinzipiell kann die Erfindung umgesetzt werden, indem jedem der zwei Vermittlungselemente 106A, 106B nur der gemeinsame SPC=3000 zugeordnet wird. Konflikte können sich dann ergeben, wenn als Verbindung 160 eine SS7-Verbindung genutzt wird, denn das Vorhandensein eines benachbarten Elements mit gleichem SPC ist im SS7-Kontext nicht definiert. Um eventuelle Konflikte aufzulösen, kann folgendes vorgesehen werden:
- In zumindest einem der Vermittlungselemente 106A, 106B wird eine Zieladresse (Destination Point Code, DPC=3000) eingerichtet, obwohl dieser bereits als eigene Ursprungsadresse (Origination Point Code, OPC=3000) vergeben ist.
- Eine Signalisierungsroute wird zu dieser Zieladresse OPC=3000 definiert, obwohl die eigene Ursprungsadresse (Origination Point Code, OPC=3000) gleichlautend ist.
- Als höchstpriore Route in einem Routeset zu dieser Zieladresse wird diejenige festgelegt, die zu dem weiteren Vermittlungselement mit gleichem SPC=3000 führt.

Wird eine standardgetreue Implementierung der vorliegenden Erfindung angestrebt, kann zusätzlich folgendes vorgesehen werden: Da es in den relevanten ITU und ANSI Standards nicht vorgesehen ist, ein Link Set 160 zwischen zwei Vermittlungselementen 106A, 106B zu aktivieren, die den gleichen Signaling Point Code SPC=3000 aufweisen, werden Vermittlungselemente 106A, 106B der Fähigkeit, mehrere Signaling Point Codes zu verwalten, genutzt, zwischen denen mehrere Link Sets vorgesehen werden (in Fig. 2 nur schematisch durch den Doppelpfeil 160 angedeutet). Diese Link Sets werden mit sogenannten Secondary Point Codes der Vermittlungselemente 106A, 106B verbunden. Im Fall der Fig. 2 sind die Secondary Point Codes gewählt als SPC2=100 bzw. SPC2=200, während der gemeinsam genutzte Signaling Point Code als Primary Point Code SPC1=3000 definiert wird. Es ist umgekehrt auch möglich, die individuellen Point Codes der Vermittlungselemente 106A, 106B als Primary Point Codes zu wählen und den gemeinsam genutzten Signaling Point Code als Secondary Point Code zu definieren (siehe unten im Zusammenhang mit Fig. 3).

Dabei dienen die Secondary Point Codes SPC2=100 bzw. SPC2=200 der Vermittlung der Nachrichten zwischen den Vermittlungselementen 106A, 106B. Alle anderen Netzelemente 102, 104, 108 und 110 werden, wie weiter oben beschrieben, jeweils mit dem gemeinsamen Primary Point Code der Vermittlungselemente 106A, 106B verbunden.

Alternativ kann vorgesehen werden, daß auch die STP 108, 110 mit den Secondary Point Codes SPC2=100 bzw. SPC2=200 verbunden werden (nicht dargestellt). Ferner kann vorgesehen werden, daß die Signalisierung zwischen den Netzelementen 102, 104 und den Netzelementen 106A, 106B nicht über die STP 108, 110, sondern unmittelbar (assoziiert) erfolgt, indem die Netzelemente 102, 104 jeweils mit dem gemeinsamen Primary Point Code der Vermittlungselemente 106A, 106B verbunden werden (nicht dargestellt).

Falls vom Grundsatz abgewichen werden kann, die Routing-Daten der anderen Netzelemente unverändert zu lassen, können auch andere Netzelemente an einen der Secondary Point Codes angeschlossen werden, mit entsprechenden Änderungen der Routing-Daten im entsprechenden Netzelement.

Nachrichten für die gemeinsame Signalisierungsadresse werden im MTP gesondert behandelt. Die Erkennung solcher Nachrichten kann auf Ebene des MTP anhand der Tatsache erfolgen, daß zur gemeinsamen Signalisierungsadresse einer solchen Nachricht ein Routeset eingerichtet ist, obwohl es sich dabei um den eigene Signalisierungsadresse handelt. Alternativ könnte die Erkennung anhand eines geeigneten Eintrags in der Message Handling Datenbank erfolgen.

Für das MTP Message Handling gelten dann die folgenden, weiter oben bereits erwähnten Routing-Regeln:
- Nachrichten, die nicht an die gemeinsame Signalisierungsadresse adressiert sind, werden normal behandelt.
- Wird eine Nachricht empfangen, die an die gemeinsame Signalisierungsadresse adressiert ist, wird zunächst überprüft, ob das empfangende Vermittlungselement dafür zuständig ist. Falls ja, wird sie dem zuständigen lokalen MTP User (z.B. ISUP) zur Bearbeitung übergeben.
- Wird eine Nachricht empfangen, die an die gemeinsame Signalisierungsadresse adressiert ist, und das empfangende Vermittlungselement ist nicht für die Nachricht zuständig, wird zunächst überprüft, ob die Nachricht über das Cross Link Set 160 empfangen wurde. Falls nein, wird sie über das Cross Linkset 160 an das andere Vermittlungselement weitergeleitet. Ist die Nachricht hingegen bereits über das Cross Linkset empfangen worden, wird die Nachricht verworfen.

Wird eine Signalisierungsnachricht (Message Signaling Unit, MSU), welche als Ursprungsadresse (OPC) die gemeinsame Signalisierungsadresse (SPC=3000) hat, über einen überlasteten SS7 Link gesendet, sollte der Message Transfer Part nur dann ein Congestion Indication Primitive (CIP) zum eigenen User Part senden (z.B. ISUP), falls dieser wirklich die Quelle war. Wurde die Nachricht nicht vom lokalen User Part generiert, sondern über das Cross Linkset 160 empfangen, sollte eine Transfer Controlled (TFC) Nachricht zum anderen Vermittlungselement gesendet werden.

Im Message Transfer Part können ferner Nachrichten betreffend den Zustand der gemeinsamen Signalisierungsadresse unterdrückt werden, da eine solche Aussage von einem einzelnen Netzelement aus häufig nicht möglich sein wird. Es werden also keine TFP, TFA oder TFC Nachrichten bezüglich der gemeinsamen Signalisierungsadresse gesendet. Ein beliebiges anderes Netzelement würde solche Nachrichten gemäß ITU oder ANSI Standard ohnehin verwerfen, da es nicht erlaubt ist, eine solche Nachricht "bezüglich sich selbst" zu senden. Genau dies würde aber geschehen, wenn das erste Vermittlungselement 106A eine der genannten Nachrichten bezüglich des zweiten Vermittlungselements 106B sendet, denn beide tragen den SPC=3000.

Außerdem kann vorgesehen werden, daß der Message Transfer Part keine COO, COA, ECO, ECA, XCO und XCA Nachrichten bezüglich der gemeinsamen Signalisierungsadresse sendet, da diese wegen des gemeinsamen Ursprungs-Pointcodes (OPC) nicht eindeutig einem der Vermittlungselemente 106A, 106B zugeordnet werden können. Im Falle eines Linkausfalls wird daher vorzugsweise nicht die sequenzgesteuerte Changeover-Prozedur, sondern die zeitgesteuerte Changeover-Prozedur genutzt, bei welcher uneindeutige Nachrichten nicht auftreten.

Es ist offensichtlich, daß auf die beschriebene Weise ein nicht-redundantes Vermittlungselement 106 (Fig. 1) durch eine redundante Konfiguration zweier Vermittlungselemente 106A, 106B ersetzt werden kann. Fällt eines der Vermittlungselemente 106A, 106B oder eine der Verbindungen 160 aus, wird dies durch herkömmliche SS7-Mechanismen detektiert, und es kann folgendes vorgesehen werden:
- Wird vom ersten Vermittlungselement 106A der Ausfall des zweiten Vermittlungselements 106B detektiert, so werden eingehende nutzkanalbezogene Nachrichten, die nicht an das erste Vermittlungselement 106A angeschlossene Nutzkanäle betreffen, nicht länger an das zweite Vermittlungselements 106B weitergeleitet, sondern verworfen.
- Bezüglich des in einer solchen Nachricht adressierten Nutzkanals wird mittels einer Blocking-Nachricht (BLO) mit geeignetem CIC an den Absender dieser Nachricht signalisiert, daß der entsprechende Nutzkanal aktuell nicht zur Verfügung steht. Damit wird der Nutzkanal durch das absendende Netzelement als blockiert vermerkt und für weitere Anforderungen nicht wieder benutzt.
- Ist der Ausfall beendet und geht das zweite Vermittlungselement 106B wieder in Betrieb, sendet es bezüglich aller angeschlossenen Nutzkanäle eine Reset-Nachricht (RSC) oder eine Circuit Group Reset Nachricht (GRS). Das erste Netzelement nimmt die Weiterleitung von Nachrichten, die nicht an das erste Vermittlungselement 106A angeschlossene Nutzkanäle betreffen, an das zweite Vermittlungselement 106B wieder auf und beendet das Senden von BLO bezüglich dieser Nutzkanäle.

Auch wenn im Falle eines Ausfalls die Kapazität des jeweils verbleibenden Vermittlungselements häufig nicht ausreichen wird, alle Verbindungsanforderungen zur Hauptverkehrszeit (BHCA = Busy Hour Call Attempts) entgegenzunehmen, ist doch ein eingeschränkter Betrieb während des Ausfalls eines Vermittlungselements möglich, der in vielen Fällen von Teilnehmern nicht wahrgenommen werden wird. Ferner erlaubt eine solche Konfiguration, z.B. während verkehrsschwacher Zeiten, das Update jeweils eines der Vermittlungselemente bei gleichzeitiger Fortsetzung des Regelbetriebs.

Wird die Erfindung genutzt, um ein Vermittlungselement 106 (Fig. 1) durch ein anderes Vermittlungselement (oder mehrere Vermittlungselemente) zu ersetzen, kann wie folgt verfahren werden:
- Das oder die neuen Vermittlungselement(e) werden installiert und unter Anwendung der vorstehend im Zusammenhang mit Fig. 2 beschriebenen Lehre mit dem gleichen SPC ausgestattet wie das alte Vermittlungselement.
- Das oder die neuen Vermittlungselement(e) werden mit Mitteln ausgerüstet, um diejenigen Nachrichten, die Nutzkanäle betreffen, die (noch) nicht an das/die neuen Vermittlungselemente angeschlossen sind, an das alte Vermittlungselement weiterzuleiten.
- Die Signalisierungsverbindungen werden so konfiguriert, daß sämtliche den gemeinsamen SPC betreffenden Signalisierungsnachrichten zunächst bei dem/den neuen Vermittlungselement(en) eingehen. Erst wenn alle neuen Vermittlungselemente ermittelt haben, daß die Nutzkanäle (noch) nicht an eines der neuen Vermittlungselemente angeschlossen sind, wird die betreffende Nachricht an das alte Vermittlungselement weitergeleitet, da die entsprechenden Nutzkanäle in diesem Fall noch dort angeschlossen sind (oder es wurden nichtexistente Nutzkanäle adressiert, was automatisch zum Verwurf der entsprechenden Nachricht im alten Netzelement führt).
- Die zunächst vollständig am alten Netzelement angeschlossenen Nutzkanäle werden sukzessive vom alten Netzelement getrennt und an das/die neue(n) Vermittlungselement(e) angeschlossen. Ist die Umstellung der Nutzkanäle vollendet, kann das alte Netzelement außer Betrieb genommen werden.

Dieses Vorgehen erlaubt eine unterbrechungsfreie Umstellung eines Vermittlungselements.

Mit Bezug auf Fig. 3 wird nachstehend erläutert, wie ein klassisches Vermittlungselement 106 (Fig. 1) unter Anwendung der Erfindung durch eine NGN Architektur ersetzt werden kann. Wiederum besteht die Aufgabe darin, zwei neue Elemente 106A und 106B anstelle des alten Elements 106 in das Netzwerk einzubringen, ohne die Routing-Informationen in anderen Netzelementen anpassen zu müssen.

Das Vorgehen entspricht prinzipiell dem in Zusammenhang mit Fig. 2 erläuterten. Im folgenden wird daher nur auf die Unterschiede eingegangen.

Eine beispielhafte NGN Architektur, die das klassische Element 106 ersetzt, umfaßt zwei Media Gateway Controller 106A und 106B sowie an den Übergängen vom IP Netz 190 in das klassische TDM Netz angeordnete Media Gateways 170, 172. Aus Redundanzgründen werden an jedem Übergang zwei Media Gateways 170A/B bzw. 172A/B vorgesehen, die jeweils von einem anderen Media Gateway Controller gesteuert werden.

Im Detail steuert ein erster MGC 106A je einen Media Gateway 170A, 172A an den Übergängen vom IP Netz 190 in das klassische TDM Netz mittels Steuerverbindung 180A bzw. 182A. Ein zweiter MGC 106B steuert ebenfalls je einen Media Gateway 170B, 172B an den Übergängen vom IP Netz 190 in das klassische TDM Netz mittels Steuerverbindung 180B bzw. 182B. Die Nutzkanalbündel 130, 132 werden geeignet auf die Media Gateways 170A/B bzw. 172A/B aufgeteilt.

Beide MGC 106A, 106B können mit beiden STP 108, 110 verbunden werden. Beide MGC 106A, 106B nutzen gemeinsam den SPC 3000, der in diesem Fall als secondary SPC (sSPC) ausgestaltet sein kann. Ferner kann der erste MGC 106A über zwei weitere primary SPC (pSPC) verfügen, nämlich pSPC 500 und 700. Der Vorteil dieser weiteren pSPC ist darin zu sehen, daß der pSPC 700 in einem gesonderten MTP-Netz angeordnet werden kann, dessen wesentliche Aufgabe darin besteht, eingehende Nachrichten an den pSPC 600 des zweiten MGC 106B weiterzuleiten. In analoger Weise kann der zweite MGC 106B zwei pSPC 600 und 800 aufweisen, wobei sich der pSPC 800 im gleichen MTP-Netz wie der pSPC 700 des ersten MGC 106A befinden kann.

Zwei Link Sets 160A, 160B dienen der Verbindung der beiden MGC 106A, 106B. Diese Link Sets 160A, 160B werden auch als Cross Link Sets bezeichnet. Jedes dieser Cross Link Sets 160A, 160B kann einen oder mehrere Link(s) aufweisen.

In einer Umrüstungsphase vom alten Vermittlungselement 106 (nicht dargestellt) auf die MGC 106A, 106B kann ein weiteres Link Set (nicht dargestellt) vorgesehen werden, über welches Nachrichten, die Nutzkanäle betreffen, die noch nicht an einen der MG 170A/B bzw. 172A/B angeschlossen sind, an das alte Netzelement weitergeleitet werden.

In allen anderen Aspekten kann das Ausführungsbeispiel gemäß Fig. 3 wie eine der im Zusammenhang mit Fig. 2 illustrierten Alternativen konfiguriert sein.

Es ist offensichtlich, daß die vorliegende Erfindung auch angewendet werden kann, wenn zwei neue Netzelemente zwei alte Netzelemente ersetzen (nicht dargestellt). In diesem Fall erhält jedes der neuen Netzelemente beide SPC der alten Netzelemente.

Zum Anschluß der Vermittlungselemente 106A, 106B an das Signalisierungsnetz kann in einer Alternative vorgesehen werden, daß von jedem STP 108 (110) anstelle eines einheitlichen Link Sets 144 (146), dessen Links in Gruppen 144A/B (146A/B) aufgeteilt werden, zwei Link Sets 144A, 144B (146A, 146B) genutzt werden.

Hierzu würde der STP 108 nicht mit dem gemeinsamen sSPC 3000 verbunden werden, sondern mit den pSPC 500 bzw. 600. Die Routing-Informationen würden so aufgebaut werden, daß STP 108 den SPC 3000 via SPC 500 und alternativ via SPC 600 erreichen kann. Damit ändern sich die Routing-Informationen lediglich im STP 108 und bleiben im restlichen Netzwerk unverändert, d.h. SPC 3000 ist über STP 108 (oder STP 110, dessen Konfiguration in analoger Weise anzupassen wäre) erreichbar. Tritt im ersten MGC 106A eine durch den ersten MGC 106A selbst erkennbare Fehlersituation auf, kann durch gewöhnliche SS7 Mechanismen ausgehend vom SPC 500 dem STP 108 signalisiert werden, daß SPC 3000 über diesen Weg nicht mehr erreichbar ist; STP 108 würde dann automatisch die alternative Route zum zweiten MGC 106B auswählen. Gleiches gilt bei Ausfall des Link Sets 144A oder Totalausfall des MGC 106A.

## Patentansprüche

1. Verfahren zum Behandeln von SS7-Nachrichten in einem SS7-Netzwerk, welches ein erstes Vermittlungselement (106A) und mindestens ein zweites Vermittlungselement (106B) mit gleichem Signaling Point Code aufweist, wobei Nutzkanalbündel (130, 132) zur Verbindung mit benachbarten Netzelementen (102, 104) zu einem Teil (130A, 132A) an das erste Vermittlungselement (106A) und zu einem weiteren Teil (130B, 132B) an das zweite Vermittlungselement (106B) angeschlossen sind, demgemäß in zumindest einem der Vermittlungselemente (106A, 106B) mit gleichem Signaling Point Code folgendes vorgesehen ist:
- Empfangen einer nutzkanalsteuernden SS7-Nachricht;
- Ermitteln des durch die empfangene SS7-Nachricht gesteuerten Nutzkanals;
- Ermitteln, ob der gesteuerte Nutzkanal an das empfangende Vermittlungselement angeschlossen ist; und
- Ausführen der Nutzkanaloperation, falls der gesteuerte Nutzkanal an das empfangende Vermittlungselement angeschlossen ist; anderenfalls
- Verwerfen der empfangenen SS7-Nachricht, falls diese von einem anderen der Vermittlungselemente (106A, 106B) empfangen wurde und bereits alle anderen Vermittlungselemente (106A, 106B) von dieser Nachricht durchlaufen wurden; anderenfalls
- Weiterleiten der empfangenen SS7-Nachricht an ein anderes der Vermittlungselemente (106A, 106B).

2. Verfahren nach Anspruch 1, demgemäß das Weiterleiten der empfangenen SS7-Nachricht an ein anderes der Vermittlungselemente (106A, 106B) so gestaltet ist, daß die empfangene SS7-Nachricht vor dem Verwurf durch eines der Vermittlungselemente (106A, 106B) jedes der der Vermittlungselemente (106A, 106B) genau einmal durchlaufen hat.

3. Verfahren nach einem der Ansprüche 1 oder 2, demgemäß das Weiterleiten der empfangenen SS7-Nachricht an ein anderes der Vermittlungselemente (106A, 106B) erfolgt, indem für jedes der Vermittlungselemente (106A, 106B) neben dem gemeinsamen Signaling Point Code ein weiterer Signaling Point Code vorgesehen wird, der innerhalb eines gesonderten logischen SS7-Netzwerks liegt, und indem die weiterzuleitende SS7-Nachricht mittels SS7-Verbindungen (160) zwischen den Vermittlungselementen (106A, 106B) weitergeleitet und vermittels der weiteren Signaling Point Codes adressiert wird.

4. Verfahren nach einem der Ansprüche 1 bis 3 für SS7-Netzwerke mit genau zwei Vermittlungselementen (106A, 106B) mit gemeinsamem Signaling Point Code, demgemäß ein Ausfall des jeweils anderen Vermittlungselements durch SS7-Mechanismen des gesonderten logischen SS7-Netzwerks detektiert wird und ansprechend auf das Detektieren eines Ausfalls des jeweils anderen Vermittlungselements die empfangene nutzkanalsteuernde SS7-Nachricht verworfen wird, falls der gesteuerte Nutzkanal nicht an das empfangende Vermittlungselement angeschlossen ist, wobei zusätzlich eine Blocking-Nachricht betreffend den gesteuerten Nutzkanal an das die nutzkanalsteuernde SS7-Nachricht sendende Netzelement gesendet wird.

5. Verfahren nach Anspruch 4, demgemäß nach einem Ausfall durch das wieder in Betrieb gehende Vermittlungselement Reset-Nachrichten bezüglich der an dieses Vermittlungselement angeschlossenen Nutzkanäle gesendet werden und durch das nicht ausgefallene Vermittlungselement die Wiederverfügbarkeit des anderen Vermittlungselements durch SS7-Mechanismen des gesonderten logischen SS7-Netzwerks detektiert wird und empfangene SS7-Nachricht wieder an das andere Vermittlungselement weitergeleitet werden, falls diese nicht von diesem anderen Vermittlungselemente (106A, 106B) empfangen wurden.

6. Netzwerkanordnung zum Behandeln von SS7-Nachrichten in einem SS7-Netzwerk mit einem ersten Vermittlungselement (106A) und mindestens einem zweiten Vermittlungselement (106B) mit gleichem Signaling Point Code, wobei Nutzkanalbündel (130, 132) zur Verbindung mit benachbarten Netzelementen (102, 104) zu einem Teil (130A, 132A) an das erste Vermittlungselement (106A) und zu einem weiteren Teil (130B, 132B) an das zweite Vermittlungselement (106B) angeschlossen sind, demgemäß zumindest eines der Vermittlungselemente (106A, 106B) mit gleichem Signaling Point Code folgendes aufweist:
- Mittel zum Empfangen einer nutzkanalsteuernden SS7-Nachricht;
- Mittel zum Ermitteln des durch die empfangene SS7-Nachricht gesteuerten Nutzkanals;
- Mittel zum Ermitteln, ob der gesteuerte Nutzkanal an das empfangende Vermittlungselement angeschlossen ist; und
- Mittel zum Ausführen der Nutzkanaloperation, falls der gesteuerte Nutzkanal an das empfangende Vermittlungselement angeschlossen ist; anderenfalls
- Verwerfen der empfangenen SS7-Nachricht, falls diese von einem anderen der Vermittlungselemente (106A, 106B) empfangen wurde und bereits alle anderen Vermittlungselemente (106A, 106B) von dieser Nachricht durchlaufen wurden; anderenfalls
- Weiterleiten der empfangenen SS7-Nachricht an ein anderes der Vermittlungselemente (106A, 106B).

7. Netzwerkanordnung nach Anspruch 6, bei der die Mittel zum Weiterleiten der empfangenen SS7-Nachricht an ein anderes der Vermittlungselemente (106A, 106B) so gestaltet sind, daß die empfangene SS7-Nachricht vor dem Verwurf durch eines der Vermittlungselemente (106A, 106B) jedes der der Vermittlungselemente (106A, 106B) genau einmal durchlaufen hat.

8. Netzwerkanordnung nach einem der Ansprüche 6 oder 7, bei der jedes der Vermittlungselemente (106A, 106B) neben dem gemeinsamen Signaling Point Code einen weiteren Signaling Point Code aufweist, der innerhalb eines gesonderten logischen SS7-Netzwerks liegt, und bei der ferner SS7-Verbindungen (160) zwischen den Vermittlungselementen (106A, 106B) vorgesehen sind, wobei die Mittel zum Weiterleiten der empfangenen SS7-Nachricht an ein anderes der Vermittlungselemente (106A, 106B) so gestaltet sind, daß die weiterzuleitende SS7-Nachricht mittels der SS7-Verbindungen (160) zwischen den Vermittlungselementen (106A, 106B) weitergeleitet und vermittels der weiteren Signaling Point Codes adressiert wird.

9. Netzwerkanordnung nach einem der Ansprüche 6 bis 8, bei der genau zwei Vermittlungselemente (106A, 106B) mit gemeinsamem Signaling Point Code vorgesehen sind, die jeweils Mittel des gesonderten logischen SS7-Netzwerks aufweisen zum Detektieren eines Ausfall des jeweils anderen Vermittlungselements und Mittel zum Verwerfen der empfangenen nutzkanalsteuernden SS7-Nachricht ansprechend auf das Detektieren eines Ausfalls des jeweils anderen Vermittlungselements und zum Senden einer Blocking-Nachricht betreffend den gesteuerten Nutzkanal an das die nutzkanalsteuernde SS7-Nachricht sendende Netzelement, falls der gesteuerte Nutzkanal nicht an das empfangende Vermittlungselement angeschlossen ist.

10. Netzwerkanordnung nach Anspruch 9, bei der die zwei Vermittlungselemente (106A, 106B) jeweils Mittel aufweisen, um nach einem Ausfall durch das wieder in Betrieb gehende Vermittlungselement Reset-Nachrichten bezüglich der an dieses Vermittlungselement angeschlossenen Nutzkanäle zu senden und durch das nicht ausgefallene Vermittlungselement die Wiederverfügbarkeit des anderen Vermittlungselements durch SS7-Mechanismen des gesonderten logischen SS7-Netzwerks zu detektieren und empfangene SS7-Nachricht wieder an das andere Vermittlungselement weiterzuleiten, falls diese nicht von diesem anderen Vermittlungselement (106A, 106B) empfangen wurden.

11. Vermittlungselement (106A, 106B) eines SS7-Netzwerks, das folgendes aufweist:
- einen ersten Signaling Point Code;
- Mittel zum Empfangen einer nutzkanalsteuernden SS7-Nachricht;
- Mittel zum Ermitteln des durch die empfangene SS7-Nachricht gesteuerten Nutzkanals;
- Mittel zum Ermitteln, ob der gesteuerte Nutzkanal an das Vermittlungselement angeschlossen ist; und
- Mittel zum Ausführen der Nutzkanaloperation, falls der gesteuerte Nutzkanal an das Vermittlungselement angeschlossen ist; anderenfalls
- Verwerfen der empfangenen SS7-Nachricht, falls diese von einem anderen Vermittlungselement (106A, 106B) mit gleichem Signaling Point Code empfangen wurde und bereits alle anderen Vermittlungselemente (106A, 106B) mit gleichem Signaling Point Code von dieser Nachricht durchlaufen wurden; anderenfalls
- Weiterleiten der empfangenen SS7-Nachricht an ein anderes Vermittlungselement (106A, 106B) mit gleichem Signaling Point Code.

12. Vermittlungselement (106A, 106B) nach Anspruch 11, welches neben dem ersten Signaling Point Code einen weiteren Signaling Point Code aufweist, der innerhalb eines gesonderten logischen SS7-Netzwerks liegt, wobei die Mittel zum Weiterleiten der empfangenen SS7-Nachricht an ein anderes Vermittlungselement (106A, 106B) so gestaltet sind, daß die weiterzuleitende SS7-Nachricht mittels einer SS7-Verbindung (160) weitergeleitet und vermittels eines weiteren Signaling Point Codes des anderen Vermittlungselements adressiert wird.

13. Vermittlungselement (106A, 106B) nach einem der Ansprüche 11 oder 12, das Mittel des gesonderten logischen SS7-Netzwerks aufweist zum Detektieren eines Ausfall des anderen Vermittlungselements und Mittel zum Verwerfen der empfangenen nutzkanalsteuernden SS7-Nachricht ansprechend auf das Detektieren eines Ausfalls des anderen Vermittlungselements und zum Senden einer Blocking-Nachricht betreffend den gesteuerten Nutzkanal an das die nutzkanalsteuernde SS7-Nachricht sendende Netzelement, falls der gesteuerte Nutzkanal nicht an das Vermittlungselement (106A, 106B) angeschlossen ist.

14. Vermittlungselement (106A, 106B) nach Anspruch 13, das Mittel aufweist, um die Wiederverfügbarkeit des anderen Vermittlungselements durch SS7-Mechanismen des gesonderten logischen SS7-Netzwerks zu detektieren und empfangene SS7-Nachricht wieder an das andere Vermittlungselement weiterzuleiten, falls diese nicht von diesem anderen Vermittlungselement (106A, 106B) empfangen wurden.

15. Vermittlungselement (106A, 106B) nach einem der Ansprüche 11 bis 14, das Mittel zum Senden von Reset-Nachrichten bezüglich der angeschlossenen Nutzkanäle nach einem Ausfall aufweist.

## Claims

1. Method for handling SS7 messages in an SS7 network which features a first switching element (106A) and at least one second switching element (106B) having the same Signalling Point Code, with payload channel groups (130, 132) for connecting to adjacent network elements (102, 104) being connected partly (130A, 132A) to the first switching element (106A) and partly (130B, 132B) to the second switching element (106B), wherein in at least one of the switching elements (106A, 106B) having the same Signalling Point Code, provision is made for the following:
- receiving an SS7 message which controls a payload channel;
- determining the payload channel which is controlled by the received SS7 message;
- determining whether the controlled payload channel is connected to the receiving switching element; and
- executing the payload channel operation if the controlled payload channel is connected to the receiving switching element; otherwise
- discarding the received SS7 message if it was received from another of the switching elements (106A, 106B) and this message has already passed through all other switching elements (106A, 106B); otherwise
- forwarding the received SS7 message to another of the switching elements (106A, 106B).

2. Method according to claim 1, wherein the forwarding of the received SS7 message to another of the switching elements (106A, 106B) is configured such that the received SS7 message passes through each of the switching elements (106A, 106B) exactly once before it is discarded by one of the switching elements (106A, 106B).

3. Method according to one of the claims 1 or 2, wherein the forwarding of the received SS7 message to another of the switching elements (106A, 106B) takes place by virtue of the fact that a further Signalling Point Code, which is located within a separate logical SS7 network, is provided for each of the switching elements (106A, 106B) in addition to the shared Signalling Point Code and by virtue of the fact that the SS7 message which must be forwarded is forwarded by means of SS7 connections (160) between the switching elements (106A, 106B) and is addressed by means of the further Signalling Point Codes.

4. Method according to one of the claims 1 or 3 for SS7 networks comprising exactly two switching elements (106A, 106B) having a shared Signalling Point Code, wherein a failure of the respective other switching element is detected by means of SS7 mechanisms of the separate logical SS7 network and, in response to the detection of a failure of the respective other switching element, the received SS7 message which controls a payload channel is discarded if the controlled payload channel is not connected to the receiving switching element, wherein a blocking message relating to the controlled payload channel is additionally sent to the network element which sent the SS7 message which controls a payload channel.

5. Method according to claim 4, wherein following a failure the switching element which has become operational again sends reset messages relating to the payload channels which are connected to this switching element and the switching element which did not fail detects the reavailability of the other switching element by means of SS7 mechanisms of the separate logical SS7 network and received SS7 messages are again forwarded to the other switching element if they were not received from this other switching element (106A, 106B).

6. Network arrangement for handling SS7 messages in an SS7 network including a first switching element (106A) and at least one second switching element (106B) having the same Signalling Point Code, wherein payload channel groups (130, 132) for connecting to adjacent network elements (102, 104) are connected partly (130A, 132A) to the first switching element (106A) and partly (130B, 132B) to the second switching element (106B), wherein in at least one of the switching elements (106A, 106B) having the same Signalling Point Code, features the following:
- means for receiving an SS7 message which controls a payload channel;
- means for determining the payload channel which is controlled by the received SS7 message;
- means for determining whether the controlled payload channel is connected to the receiving switching element; and
- means for executing the payload channel operation if the controlled payload channel is connected to the receiving switching element; otherwise
- discarding the received SS7 message if it was received from another of the switching elements (106A, 106B) and this message has already passed through all other switching elements (106A, 106B); otherwise
- forwarding the received SS7 message to another of the switching elements (106A, 106B).

7. Network arrangement according to claim 6, wherein the means for forwarding the received SS7 message to another of the switching elements (106A, 106B) are configured such that the received SS7 message passes through each of the switching elements (106A, 106B) exactly once before it is discarded by one of the switching elements (106A, 106B).

8. Network arrangement according to one of the claims 6 or 7, wherein in addition to the shared Signalling Point Code each of the switching elements (106A, 106B) features a further Signalling Point Code which is located within a separate logical SS7 network and wherein provision is further made for SS7 connections (160) between the switching elements (106A, 106B), wherein the means for forwarding the received SS7 message to another of the switching elements (106A, 106B) are configured such that the SS7 message which must be forwarded is forwarded by means of the SS7 connections (160) between the switching elements (106A, 106B) and is addressed by means of the further Signalling Point Codes.

9. Network arrangement according to one of the claims 6 to 8, wherein provision is made for exactly two switching elements (106A, 106B) having a shared Signalling Point Code and having in each case means of the separate logical SS7 network for detecting a failure of the respective other switching element and, in response to the detection of a failure of the respective other switching element, means for discarding the received SS7 message which controls a payload channel and for sending a blocking message relating to the controlled payload channel to the network element that sent the SS7 message which controls the payload channel, if the controlled payload channel is not connected to the receiving switching element.

10. Network arrangement according to claim 9, wherein the two switching elements (106A, 106B) in each case include means whereby, following a failure, the switching element which has become operational again sends reset messages relating to the payload channels which are connected to this switching element and the switching element which did not fail detects the reavailability of the other switching element by means of SS7 mechanisms of the separate logical SS7 network and received SS7 messages are again forwarded to the other switching element if they were not received from this other switching element (106A, 106B).

11. Switching element (106A, 106B) of an SS7 network featuring the following:
- a first Signalling Point Code;
- means for receiving an SS7 message which controls a payload channel;
- means for determining the payload channel which is controlled by the received SS7 message;
- means for determining whether the controlled payload channel is connected to the switching element; and
- means for executing the payload channel operation if the controlled payload channel is connected to the switching element; otherwise
- discarding the received SS7 message if it was received from another switching element (106A, 106B) having the same Signalling Point Code and if this message has already passed through all other switching elements (106A, 106B) having the same Signalling Point Code; otherwise
- forwarding the received SS7 message to another switching element (106A, 106B) having the same Signalling Point Code.

12. Switching element (106A, 106B) according to claim 11, featuring in addition to the first Signalling Point Code a further Signalling Point Code which is located within a separate logical SS7 network, wherein the means for forwarding the received SS7 message to another switching element (106A, 106B) are configured such that the SS7 message which must be forwarded is forwarded by means of an SS7 connection (160) and is addressed by means of a further Signalling Point Code of the other switching element.

13. Switching element (106A, 106B) according to one of the claims 11 or 12, having means of the separate logical SS7 network for detecting a failure of the other switching element and, in response to the detection of a failure of the other switching element, means for discarding the received SS7 message which controls a payload channel and for sending a blocking message relating to the controlled payload channel to the network element that sent the SS7 message which controls the payload channel, if the controlled payload channel is not connected to the switching element (106A, 106B).

14. Switching element (106A, 106B) according to claim 13, having means for detecting the reavailability of the other switching element using SS7 mechanisms of the separate logical SS7 network and for forwarding received SS7 messages to the other switching element again if they were not received from this other switching element (106A, 106B).

15. Switching element (106A, 106B) according to one of the claims 11 to 14, having means for sending reset messages relating to the connected payload channels following a failure.

## Revendications

1. Procédé pour le traitement de messages SS7 dans un réseau SS7, qui présente un premier élément de commutation (106A) et au moins un second élément de commutation (106B) avec le même Signaling Point Code, dans lequel des groupes de canaux utiles (130, 132) sont raccordés pour la liaison avec des éléments de réseau (102, 104) voisins pour une partie (130A, 132A) au premier élément de commutation (106A) et pour une autre partie (130B, 132B) au second élément de commutation (106B), sachant qu'en conséquence les opérations suivantes sont prévues dans au moins l'un des éléments de commutation (106A, 106B) avec le même Signaling Point Code:
- réception d'un message SS7 commandant le canal utile ;
- détermination du canal utile commandé par le message SS7 reçu ;
- déterminer si le canal utile commandé est raccordé à l'élément de commutation récepteur ; et
- exécution de l'opération de canal utile dans le cas où le canal utile commandé est raccordé à l'élément de commutation récepteur ; autrement
- rejet du message SS7 reçu dans le cas où celui-ci a été reçu par un autre des éléments de commutation (106A, 106B) et si tous les autres éléments de commutation (106A, 106B) ont été déjà traversés par ce message ; autrement
- transmission du message SS7 reçu à un autre des éléments de commutation (106A, 106B).

2. Procédé selon la revendication 1, selon lequel la transmission du message SS7 reçu à un autre des éléments de commutation (106A, 106B) est conçue de telle sorte que le message SS7 reçu a traversé exactement une fois chacun des éléments de commutation (106A, 106B) avant le rejet par l'un des éléments de commutation (106A, 106B).

3. Procédé selon l'une quelconque des revendications 1 ou 2, selon lequel la transmission du message SS7 reçu à un autre des éléments de commutation (106A, 106B) s'effectue par le fait que, pour chacun des éléments de commutation (106A, 106B), il est prévu parallèlement au Signaling Point Code commun un autre Signaling Point Code qui est disposé à l'intérieur d'un réseau SS7 logique séparé et par le fait que le message SS7 à transmettre est transmis au moyen de liaisons SS7 (160) entre les éléments de commutation (106A, 106B) et est adressé au moyen des autres Signaling Point Codes.

4. Procédé selon l'une quelconque des revendications 1 à 3 pour des réseaux SS7 comprenant exactement deux éléments de commutation (106A, 106B) avec un Signaling Point Code commun, selon lequel une défaillance de l'autre élément de commutation respectif est détectée par des mécanismes SS7 du réseau SS7 logique séparé et, en réaction à la détection d'une défaillance de l'autre élément de commutation concerné, le message SS7 reçu et commandant le canal utile est rejeté dans le cas où le canal utile commandé n'est pas raccordé à l'élément de commutation récepteur, sachant qu'en supplément un message de blocage concernant le canal utile commandé est envoyé à l'élément de réseau envoyant le message SS7 commandant le canal utile.

5. Procédé selon la revendication 4, selon lequel, après une défaillance, des messages de réinitialisation concernant les canaux utiles raccordés à cet élément de commutation sont envoyés par l'élément de commutation remis en service, la redisponibilité de l'autre élément de commutation obtenue par des mécanismes SS7 du réseau SS7 logique séparé est détectée par l'élément de commutation non défaillant et les messages SS7 reçus sont transmis à nouveau à l'autre élément de commutation dans le cas où ceux-ci n'ont pas été reçus par cet autre élément de commutation (106A, 106B).

6. Agencement de réseau pour le traitement de messages SS7 dans un réseau SS7 comprenant un premier élément de commutation (106A) et au moins un second élément de commutation (106B) avec le même Signaling Point Code, dans lequel des groupes de canaux utiles (130, 132) sont raccordés pour la liaison avec des éléments de réseau (102, 104) voisins pour une partie (130A, 132A) au premier élément de commutation (106A) et pour une autre partie (130B, 132B) au second élément de commutation (106B), selon lequel au moins l'un des éléments de commutation (106A, 106B) avec le même Signaling Point Code présente les éléments suivants :
- des moyens pour la réception d'un message SS7 commandant le canal utile ;
- des moyens pour déterminer le canal utile commandé par le message SS7 reçu ;
- des moyens pour déterminer si le canal utile commandé est raccordé à l'élément de commutation récepteur ; et
- des moyens pour la mise en oeuvre de l'opération du canal utile dans le cas où le canal utile commandé est raccordé à l'élément de commutation récepteur ; autrement
- rejet du message SS7 récepteur dans le cas où celui-ci a été reçu par un autre des éléments de commutation (106A, 106B) et si tous les autres éléments de commutation (106A, 106B) ont été déjà traversés par ce message ; autrement
- transmission du message SS7 reçu à un autre des éléments de commutation (106A, 106B).

7. Agencement de réseau selon la revendication 6, sur lequel les moyens pour la transmission du message SS7 reçu à un autre des éléments de commutation (106A, 106B) sont conçus de telle sorte que le message SS7 reçu a traversé exactement une fois chacun des éléments de commutation (106A, 106B) avant le rejet par l'un des éléments de commutation (106A, 106B).

8. Agencement de réseau selon l'une quelconque des revendications 6 ou 7, sur lequel chacun des éléments de commutation (106A, 106B) présente en plus du Signaling Point Code commun un autre Signaling Point Code, qui se situe à l'intérieur d'un réseau SS7 logique séparé, et sur lequel également des liaisons SS7 (160) sont prévues entre les éléments de commutation (106A, 106B), les moyens pour la transmission du message SS7 reçu à un autre des éléments de commutation (106A, 106B) étant conçus de telle sorte que le message SS7 à transmettre est transmis au moyen des liaisons SS7 (160) entre les éléments de commutation (106A, 106B) et adressé au moyen des autres Signaling Point Codes.

9. Agencement de réseau selon l'une quelconque des revendications 6 à 8, sur lequel exactement deux éléments de commutation (106A, 106B) sont prévus avec un Signaling Point Code commun, qui présentent respectivement des moyens du réseau SS7 logique séparé pour la détection d'une défaillance de l'autre élément de commutation respectif et des moyens pour le rejet du message SS7 reçu et commandant le canal utile en réponse à la détection d'une défaillance de l'autre élément de commutation concerné et pour l'envoi d'un message de blocage concernant le canal utile commandé à l'élément de réseau envoyant le message SS7 commandant le canal dans le cas où le canal utile commandé n'est pas raccordé à l'élément de commutation récepteur.

10. Agencement de réseau selon la revendication 9, sur lequel les deux éléments de commutation (106A, 106B) présentent chacun des moyens pour envoyer, après une défaillance provoquée par l'élément de commutation remis en service, des messages de réinitialisation concernant les canaux utiles raccordés à cet élément de commutation et détecter par l'élément de commutation non défaillant la redisponibilité de l'autre élément de commutation par des mécanismes SS7 du réseau SS7 logique séparé et pour transmettre le message SS7 reçu à nouveau à l'autre élément de commutation, dans le cas où celui-ci n'a pas été reçu par cet autre élément de commutation (106A, 106B).

11. Elément de commutation (106A, 106B) d'un réseau SS7, qui présente les éléments suivants :
- un premier Signaling Point Code ;
- des moyens pour la réception d'un message SS7 commandant le canal utile ;
- des moyens pour déterminer le canal utile commandé par le message SS7 reçu ;
- des moyens pour déterminer si le canal utile commandé est raccordé à l'élément de commutation ; et
- des moyens pour la mise en oeuvre de l'opération de canal utile dans le cas où le canal utile commandé est raccordé à l'élément de commutation ; autrement
- rejet du message SS7 reçu si celui-ci a été reçu par un autre élément de commutation (106A, 106B) avec le même Signaling Point Code et si tous les autres éléments de commutation (106A, 106B) avec le même Signaling Point Code ont été déjà traversés par ce message ; autrement
- transmission du message SS7 reçu à un autre élément de transmission (106A, 106B) présentant le même Signaling Point Code.

12. Elément de commutation (106A, 106B) selon la revendication 11, qui présente en plus du premier Signaling Point Code un autre Signaling Point Code qui est situé à l'intérieur d'un réseau SS7 logique séparé, les moyens pour la transmission du message SS7 reçu à un autre élément de commutation (106A, 106B) étant conçus de telle sorte que le message SS7 à transmettre est transmis au moyen d'une liaison SS7 (160) et est adressé au moyen d'un autre Signaling Point Code de l'autre élément de commutation.

13. Elément de commutation (106A, 106B) selon l'une quelconque des revendications 11 ou 12, qui présente des moyens du réseau SS7 logique séparé pour la détection d'une défaillance de l'autre élément de commutation et des moyens pour le rejet du message SS7 reçu et commandant le canal utile en réaction à la détection d'une défaillance de l'autre élément de commutation et pour l'envoi d'un message de blocage concernant le canal utile commandé à l'élément de réseau envoyant le message SS7 commandant le canal utile dans le cas où le canal utile commandé n'est pas raccordé à l'élément de commutation (106A, 106B).

14. Elément de commutation (106A, 106B) selon la revendication 13, qui présente des moyens pour détecter la redisponibilité de l'autre élément de commutation par des mécanismes SS7 du réseau SS7 logique séparé et transmettre le message SS7 reçu à nouveau à l'autre élément de commutation, dans le cas où ceux-ci n'ont pas été reçus par cet autre élément de commutation (106A, 106B).

15. Elément de commutation (106A, 106B) selon l'une quelconque des revendications 11 à 14, qui présente des moyens pour l'envoi de messages de réinitialisation concernant les canaux utiles raccordés après une défaillance.
